# EUROPEAN PATENT SPECIFICATION

(11) **EP 4 213 115 B1**
(45) Date of publication and mention of the grant of the patent: **02.07.2025**
(21) Application number: 22205131.0
(22) Date of filing: 02.11.2022
(51) Int. Cl.: G06V 30/41, G06V 10/774, G06V 10/80, G06V 10/82, G06V 30/414, G06T 3/60

(54) **OBJECT DETECTION USING NEURAL NETWORKS**
OBJEKTERKENNUNG MIT NEURONALEN NETZWERKEN
DÉTECTION D'OBJET À L'AIDE DE RÉSEAUX NEURONAUX

(30) Priority: 18.01.2022 EP 22305045; 18.01.2022 EP 22386001; 17.03.2022 US 202217697721
(43) Date of publication of application: 19.07.2023
(73) Proprietor: Accenture Global Solutions Limited, Dublin 4 (IE)
(72) Inventor: CHATZISTAMATIOU, Andre, 45147 Essen (DE); CREMENESCU, Florin, 06 410 Biot (FR); GARCIA, Jomarie Rodelas, Batangas (PH); DEBARD, Guillaume, 06600 Antibes (FR); ALAIYAN, Nadia Elina, 75003 Paris (FR)
(74) Representative: Müller-Boré & Partner Patentanwälte PartG mbB

(56) References cited:
- US-A1- 2021 064 859
- KLEBER SANTOS LEITE MELO VICTOR ET AL: "A Fully Convolutional Network for Signature Segmentation from Document Images", 2018 16TH INTERNATIONAL CONFERENCE ON FRONTIERS IN HANDWRITING RECOGNITION (ICFHR), IEEE, 5 August 2018 (2018-08-05), pages 540 - 545, XP033480605, DOI: 10.1109/ICFHR-2018.2018.00100
- PAJARES G ET AL: "A wavelet-based image fusion tutorial", PATTERN RECOGNITION, ELSEVIER, GB, vol. 37, no. 9, 1 September 2004 (2004-09-01), pages 1855 - 1872, XP004516614, ISSN: 0031-3203, DOI: 10.1016/J.PATCOG.2004.03.010

## Description

### BACKGROUND

Digitized documents are generally used across various business organizations. These digitized documents may need processing to facilitate detection and extraction of objects therein. For example, the digitized documents (such as scanned documents) may require effective detection of objects, such as, for example, signatures for purpose of validation and identification. This may be applicable in case of several administrative documents such as, for example, legal documents, bank cheques, and ID cards. One commonly known technique for recognition of text includes Optical Character Recognition (OCR). However, detection and extraction of objects such as, for example, signatures, may not be practically feasible using conventional tools, such as OCR. Further, in case of unstructured documents, the detection of such objects may be challenging as the object may be located anywhere in the document, unlike structured documents having a pre-defined expected position (such as, for example, a signature field). Furthermore, objects such as a signature may not include definite text or font and/or may overlap with other fields.

Conventional tools for object/signature extraction may include, for example, classical computer vision methods. In this technique, contour detection is performed after binarization of a document, and all relatively small contours are removed. Assuming that the document contains printed letters except for the signature, only the signature may remain as it may include a relatively large contour. However, such a technique may have limitations, as it may not work if other large contours are present on the image, such as, for example, logos or text with a large font size.

Deep learning neural networks may be a feasible choice for developing reliable models for object detection. However, these models may require significant training data for high accuracy. Especially, it may be very challenging to obtain diverse training datasets especially for objects such as signatures, given their uniqueness and variance. Moreover, the training datasets may not be customizable and/or may not be effective in training the model to identify the objects from any location in a test document. This may lead to ineffective, slow and inaccurate detection of objects, thereby nullifying the merits of digitization.

US 2021/064859 A1 discloses a method for generating learning data, wherein a handwriting image and a background image are combined to generate a combined image. The learning data is used to train a neural network for extracting a handwritten character from an input image.

Kleber Santos Leite Melo Victor et al., "A Fully Convolutional Network for Signature Segmentation from Document Images" (2018 16th International Conference on Frontiers in Handwriting Recognition (ICFHR), IEEE, 5 August 2018, pages 540-545) discloses a method for the stroke-based extraction of signatures from document images. The approach is based on a fully convolutional network trained and evaluated on a dataset created synthetically by blending signatures with real documents.

### SUMMARY

An embodiment of present disclosure includes a system including a processor. The processor is coupled to a data lake. The data lake is configured to store digitized input datasets including a plurality of input images and a plurality of original documents. Each input image includes a pre-defined representation of the object. The processor includes a dataset generator. The dataset generator obtains a first input image and a first original document from the data lake. The first input image is obtained from the plurality of input images and the first input document is obtained from a plurality of original documents. The first input image bears a first pre-defined representation of the object. The dataset generator prunes a portion of the first original document to obtain a pruned image. The dataset generator blends the first input image with the pruned image using a blending technique which comprises a wavelet transformation technique. The blending leads to a modified image. The modified image includes the pruned image bearing the first pre-defined representation. The modified image is combined with the first original document to generate a training dataset. The training dataset is utilized to train a neural network based model to obtain a trained model. The trained model is used for the automated detection of the object in the test document. The test document is a scanned document. The neural network based model may be a convolutional neural network (CNN) based model.

Another embodiment of the present disclosure includes a method for facilitating an automated detection of an object in a test document. The test document is a scanned document. The method includes a step of obtaining a first input image from a plurality of input images and a first original document from the plurality of original documents. The first input image bears a first pre-defined representation of the object. The plurality of input images and the plurality of original documents are stored as digitized input datasets in a data lake. Each input image includes a pre-defined representation of the object. The method includes a step of pruning a portion of the first original document to obtain a pruned image. The method includes a step of blending the first input image with the pruned image to obtain a modified image. The blending is performed using a blending technique which comprises a wavelet transformation technique. The modified image includes the pruned image bearing the first pre-defined representation. The method includes a step of combining the modified image with the first original document to generate a training dataset. The method includes a step of training a neural network based model with the training dataset to obtain a trained model. The method includes a step of detecting automatically the object in the test document by utilizing the trained model.

Yet another embodiment of the present disclosure includes a non-transitory computer readable medium comprising machine executable instructions that are executable by a processor to obtain a first input image from a plurality of input images and a first original document from a plurality of original documents. The first input image bears a first pre-defined representation of the object. The plurality of input images and the plurality of original documents are stored as digitized input datasets in a data lake. Each input image includes a pre-defined representation of the object. The processor prunes a portion of the first original document to obtain a pruned image. The processor blends the first input image with the pruned image to obtain a modified image. The blending is performed using a blending technique which comprises a wavelet transformation technique. The modified image includes the pruned image bearing the first pre-defined representation. The processor combines the modified image with the first original document to generate a training dataset. The processor trains a neural network based model with the training dataset to obtain a trained model. The processor automatically detects the object in the test document by utilizing the trained model.

### BRIEF DESCRIPTION OF DRAWINGS

FIG. 1 illustrates a system for facilitating an automated detection of an object in a test document, according to an example embodiment of the present disclosure.
FIG. 2 illustrates an exemplary representation of stages involved in automated detection of an object in a test document, according to an example embodiment of the present disclosure.
FIGs. 3A-3B illustrate an exemplary representation of a generated training dataset, according to an example embodiment of the present disclosure.
FIG. 4 illustrates an exemplary representation of a modified image, according to an example embodiment of the present disclosure.
FIGs. 5A-5B illustrate an exemplary representation for automated detection of an object in a test document, according to an example embodiment of the present disclosure.
FIG. 6 illustrates a hardware platform for implementation of the disclosed system, according to an example embodiment of the present disclosure.
FIG. 7 illustrates a flow diagram for facilitating an automated detection of an object in a test document, according to an example embodiment of the present disclosure.
FIG. 8 illustrates an exemplary flow diagram for depicting steps involved in generation of training dataset and annotated dataset, according to an example embodiment of the present disclosure.
FIG. 9 illustrates an exemplary flow diagram depicting steps involved in automated detection of an object in a test document, according to an example embodiment of the present disclosure.

### DETAILED DESCRIPTION

For simplicity and illustrative purposes, the present disclosure is described by referring mainly to examples thereof. The examples of the present disclosure described herein may be used together in different combinations. In the following description, details are set forth in order to provide an understanding of the present disclosure. It will be readily apparent, however, that the present disclosure may be practiced without limitation to all these details. Also, throughout the present disclosure, the terms "a" and "an" are intended to denote at least one of a particular element. The terms "a" and "a" may also denote more than one of a particular element. As used herein, the term "includes" means includes but not limited to, the term "including" means including but not limited to. The term "based on" means based at least in part on, the term "based upon" means based at least in part upon, and the term "such as" means such as but not limited to. The term "relevant" means closely connected or appropriate to what is being performed or considered.

Various embodiments describe providing a solution in the form of a system and a method for facilitating an automated detection of an object in a test document. The system may include a processor. The processor may be coupled to a data lake. The data lake may store digitized input datasets including a plurality of input images and a plurality of original documents. In an example embodiment, each input image may include a pre-defined representation of the object. The processor may include a dataset generator that may obtain a first input image and a first original document from the data lake. The first input image may be obtained from the plurality of input images and the first input document may be obtained from a plurality of original documents. The first input image may bear a first pre-defined representation of the object. The dataset generator may prune a portion of the first original document to obtain a pruned image. The dataset generator may blend the first input image with the pruned image using a blending technique. The blending may lead to a modified image. The modified image may include the pruned image bearing the first pre-defined representation. The modified image may be combined with the first original document to generate a training dataset. In an example embodiment, the training dataset may be utilized to train a neural network based model to obtain a trained model. The trained model may be used for the automated detection of the object in the test document.

Exemplary embodiments of the present disclosure have been described in the framework for facilitating an automated detection of an object in a test document. The embodiments may describe a system and a method to perform facilitating an automated detection of the object in the test document through a neural network based model. The automated detection may be performed through a neural network based model using a training dataset. Some embodiments may describe a system and a method to generate the training dataset for training the neural network based model. The training dataset may be generated based on a plurality of input images and a plurality of original documents in the data lake. The system and method may combine one or more of the input images with each original document in a unique manner. For example, the dataset generator may prune and blend the input image with the original document to generate the training dataset. Once the neural network based model may be trained using the training dataset, the model may be able to automatically locate the objects on test documents. The detection of objects may be performed for objects, for example, a handwritten signature or a digital signature so that the model can automatically detect the signature on the test documents. However, the objects may not be restricted to signatures, but also may be used for other objects such as, for example, signature, a digital signature, a checkbox section, an image, a handwritten text and a drawing. The automated detection may be especially useful in case when the object is to detected in unstructured documents. For example, if an object, such as, a signature, needs to be detected and if the location of the signature section may not be pre-defined, the automated detection may act as smart tool for locating the signatures. The system and method of the present disclosure may be applied to several applications that involve object detection in fields, such as, for example, banking, insurance, capital markets, travel, hospitality, health care, and other such fields. For example, the present disclosure may be useful for processes such as insurance processing, loan processing, and banking that may require to extract objects (such as signatures or some sections) from a large number of documents/forms for authentication/identification. However, one of ordinary skill in the art will appreciate that the present disclosure may not be limited to such applications. The system may also be integrated with other tools or application that require automated detection of objects in document. Several other advantages may be realized.

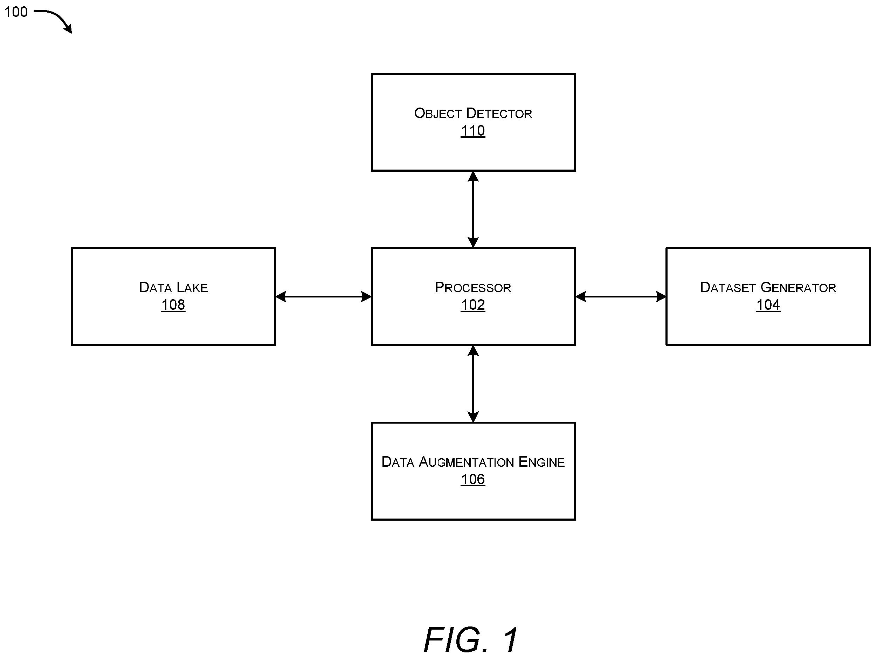

FIG. 1 illustrates a system 100 for facilitating an automated detection of an object in a test document, according to an example embodiment of the present disclosure. The system 100 may be implemented by way of a single device or a combination of multiple devices that are operatively connected or networked together. The system 100 may be implemented in hardware or a suitable combination of hardware and software. The system 100 includes a processor 102. The processor 102 may be coupled to a data lake 108. The data lake 108 may store digitized input datasets including a plurality of input images and a plurality of original documents. In an example embodiment, each input image may include a pre-defined representation of the object. The processor 102 may include a dataset generator 104 that may obtain a first input image and a first original document from the data lake. The first input image may be obtained from the plurality of input images and the first input document may be obtained from a plurality of original documents. The first input image may bear a first pre-defined representation of the object. The dataset generator 104 may prune a portion of the first original document to obtain a pruned image. In an example embodiment, the portion to be pruned may be decided on a random basis. In an example embodiment, the pruning may be performed using open computer vision (CV) library. The dataset generator 104 may blend the first input image with the pruned image using a blending technique. In an example embodiment, the blending may be performed based on global parameters that control the blending. The blending may lead to a modified image. The modified image may include the pruned image bearing the first pre-defined representation. The modified image may be combined with the first original document to generate a training dataset. In an example embodiment, the training dataset may be utilized to train a neural network based model to obtain a trained model. The trained model may be used for the automated detection of the object in the test document. In an example embodiment, the processor may include an object detector to detect the objects using the trained model. The processor 102 may include a data augmentation engine 106. The data augmentation engine 106 may augment the generated training dataset to obtain an augmented dataset. The augmented dataset may be obtained by processing the training dataset. The processing may be performed by at least one of noise removal, background editing, reduction of blurring effect, object cropping, object flipping, object rotation, object scaling, brightness adjustment, contrast adjustment and duplication of the first pre-defined representation of the object.

The system 100 may be a hardware device including the processor 102 executing machine readable program instructions to facilitate an automated detection of an object in a test document. Execution of the machine readable program instructions by the processor 102 may enable the proposed system to facilitate an automated detection of an object in a test document. The "hardware" may comprise a combination of discrete components, an integrated circuit, an application-specific integrated circuit, a field programmable gate array, a digital signal processor, or other suitable hardware. The "software" may comprise one or more objects, agents, threads, lines of code, subroutines, separate software applications, two or more lines of code or other suitable software structures operating in one or more software applications or on one or more processors. The processor 102 may include, for example, microprocessors, microcomputers, microcontrollers, digital signal processors, central processing units, state machines, logic circuits, and/or any devices that manipulate data or signals based on operational instructions. Among other capabilities, processor 102 may fetch and execute computer-readable instructions in a memory operationally coupled with system 100 for performing tasks such as processing, data/object extraction, object detection and/or any other functions. Any reference to a task in the present disclosure may refer to an operation being or that may be performed on data.

The original documents used for generating the training dataset may pertain to forms and/or contracts that may correspond to a domain of interest. For example, the neural network based model may be trained for object detection for banking applications by utilizing banking forms and other such pre-stored documents. Further, the first pre-defined representation of the object may be particularly useful in training the model with variety of possible forms of the object. For example, if signature may be required to be detected, the system may combine various possible forms of signatures. For example, some signature samples may be hand-written whereas some may be digital signatures. In addition, the position at which the signature may be present may not be pre-defined in case of unstructured documents. This can make it extremely challenging to detect objects for extraction using conventional tools/techniques. The present disclosure ensures that the training datasets are generated in such a way that the neural network based model may be trained using a wide variety or diverse datasets, which can be useful to detect objects in any type of test documents (including unstructured documents).

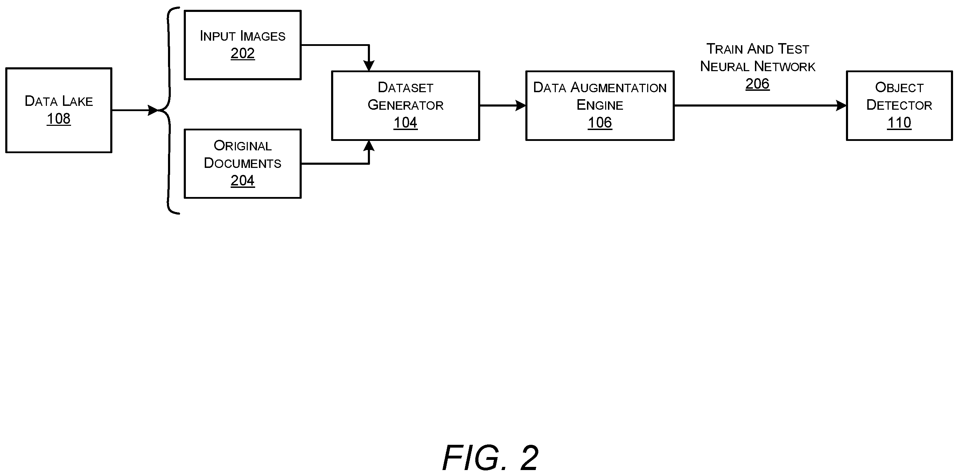

FIG. 2 illustrates an exemplary representation of stages involved in automated detection of an object in a test document, according to an example embodiment of the present disclosure. As illustrated in FIG. 2, the data lake 108 may store digitized input datasets including a plurality of input images and a plurality of original documents. In an example embodiment, the dataset generator 104 may obtain a first input image and a first original document from the data lake. The first input image may be received from the plurality of input images 202 and the first original document may be received from the plurality of original documents 204. The first input image may bear a first pre-defined representation of the object. In an example embodiment, the object may include at least one of a signature, a digital signature, a checkbox section, an image, a handwritten text and a drawing. For example, in one instance, the object may be signature that may be needed to be detected for extraction. In another instance, the object may be a checkbox section (for example, checkbox in a questionnaire) that may needed to be detected in a test document. Several other objects may be included. In an example embodiment, the plurality of input images may pertain to a set of diverse image samples bearing the object. For example, the input image may be snippets of a signature sample. Each input image may include a pre-defined representation of an object. In an example embodiment, the pre-defined representation may pertain to a variation in the form of the object. For example, assuming the object is a signature, it can be unique for each individual and also different individuals may have different styles of signing. For example, some individuals may sign with only initials, while signature of other individuals may include a name in cursive writing. The automated object detection thus can be useful with respect to variation in form of the object. Further, not only the variety of styles but also the position of signature in a form/document may vary. For example, for additional authentication, an individual may sign across the margins in addition to a pre-defined position. The present system and method may enable to train the model with varying instances of object position in the original documents. This may facilitate automated object detection with respect to even variation in position of the object. In an example embodiment, the plurality of original documents 204 may include pre-stored forms or documents pertaining to a domain. For example, the original documents may be bank forms that may be used at the time of an account registration. In another example, the original document may be an insurance form. Several other documents may be included in the original documents.

In an example embodiment, the dataset generator 104 may loop through the plurality of original documents 204 and selects the first original document. The first original document may be processed to create a batch including multiple copies of the first original document. For each copy of the first original document, the dataset generator 104 may randomly select the first input image from the plurality of images 202. In an alternate embodiment, selection of the first input image and the first document may be customized as per the requirements of an end application. Further, in an example embodiment, the first input image and/or the first original document may be pre-processed as per standard requirements. For example, prior to processing, one standard requirement may be to arrange the first original document as per an expected layout/orientation, such as, for example, in portrait or landscape. The dataset generator 104 may generate the training dataset using the first input image and the first original document. This may be achieved by pruning a portion of the first original document to obtain a pruned image. The pruning may refer to cropping the portion of the original document. The portion that is cropped may correspond to a position where the first input image that may be required to be inserted in the first original document. The dataset generator 104 may blend the first input image with the pruned image to obtain a modified image. The blending is performed by using a blending technique which comprises a wavelet transformation technique. In an example embodiment, the blending may be performed by at least one of Poisson Blending, Image Melding, Interactive Digital Photomontage, Fast Poisson Blending using Multi-Splines and other such techniques. The blending may reduce sharp transitions to enable to generate effective training dataset. Further, the modified image may be combined with the first original document to generate a training dataset. In an alternate embodiment, the pruning may be performed to derive a pruned document including only the portion of interest (of the first original document) such that the step of blending may generated a pruned document bearing the object. In the instant embodiment, the pruned document including the object may be combined with the first original document to obtain the training dataset. The dataset generator 104 may generate such multiple training datasets for training the neural network based model based on the requirements of training the model.

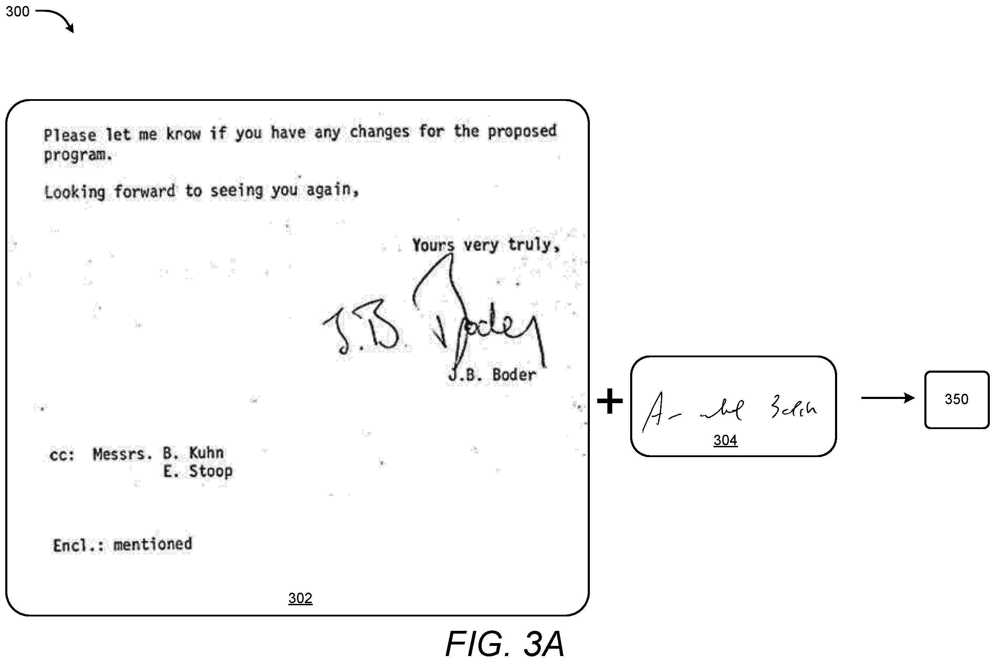

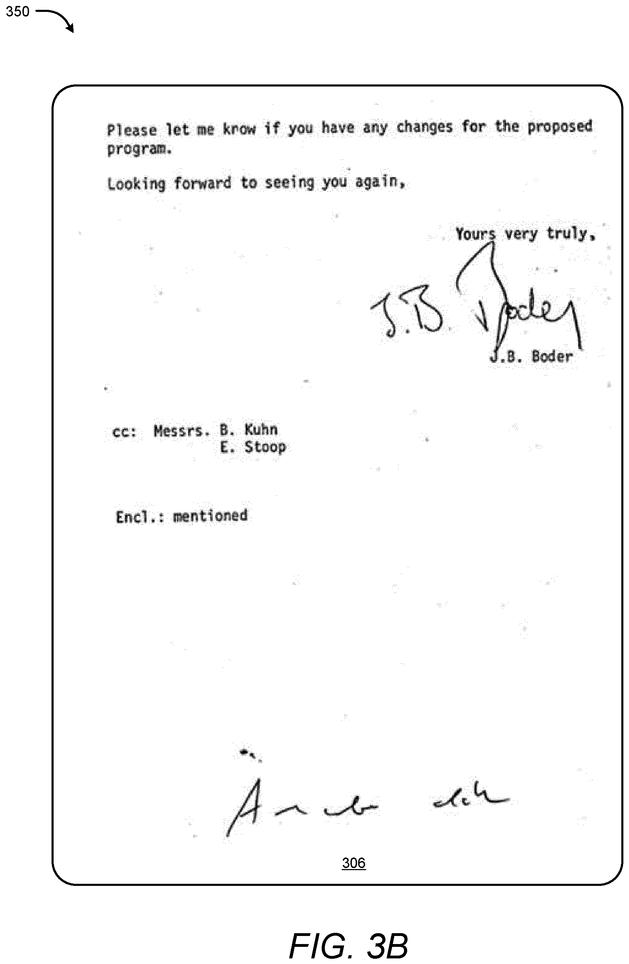

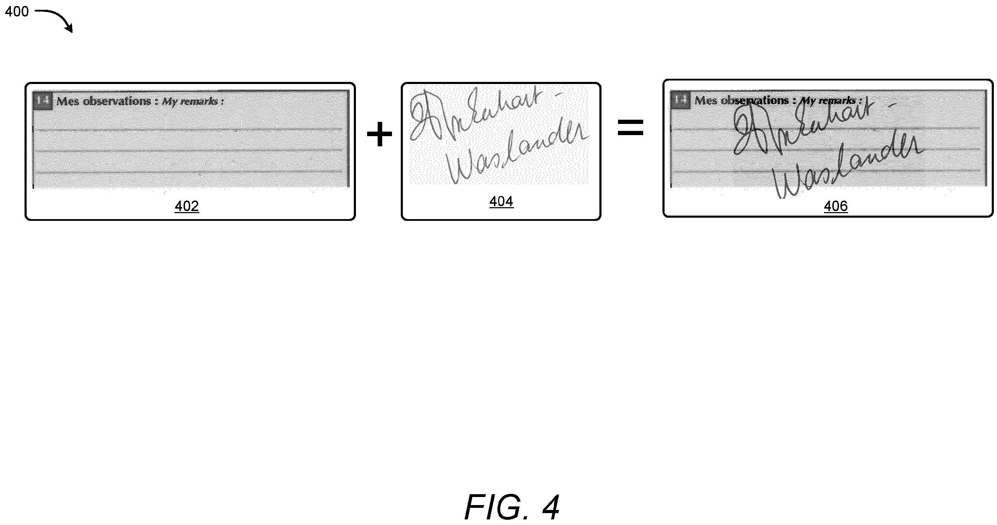

FIGs. 3A-3B illustrate an exemplary representation of a generated training dataset, according to an example embodiment of the present disclosure. As illustrated in FIG. 3A, a first input image 304 may be an image including a signature. The first input image 304 may be combined with first original document 302 in the manner as described hereinabove. The output may be in the form of or may be utilized to generate a training dataset 350. As observed in FIG. 3B (350), the signature pertaining to 304 is blended with 302 in its second half portion. FIG. 4 illustrates an exemplary representation 400 of a modified image, according to an example embodiment of the present disclosure. In an example embodiment, and as illustrated in FIG. 4, the first input image may be signature based image 404 that may be required to be blended with the first a portion of the first original document. The dataset generator may pruned a portion of the first original document to obtain a pruned image 402 as illustrated in FIG. 4. The dataset generator may blend the first input image 404 with the pruned image 402 to obtain a modified image 406. The blending may be performed to reduce sharp transitions to enable to generate effective training dataset.

In an example embodiment, the system may build an annotation for the training datasets. For example, at least one of the modified document, the training dataset and the augmented dataset may be annotated to obtain an annotated dataset. The annotated dataset may be indicative of an information pertaining to the at least one of co-ordinates of the object on the annotated dataset and a local storage path of the modified image. For example, to build the annotated dataset, the system may label the modified image and/or the training dataset such that the position of the blended object in the training dataset may be included. In another example, the system may save the modified image and/or the training dataset in a specific local storage such that information of the storage location may be included in the annotated dataset. Upon generation of the training dataset, the data augmentation engine 106 may augment the generated training dataset to obtain an augmented dataset. In an example embodiment, the augmented dataset may be obtained by processing the training dataset. The augmented dataset may be an enhanced or corrected version of the training dataset that may lead to improvement in one or more features of the training dataset for effective training. For example, the augmented dataset may be obtained by processing the training dataset through at least one of noise removal, background editing, reduction of blurring effect, object cropping, object flipping, object rotation, object scaling, brightness adjustment, contrast adjustment and duplication of the first pre-defined representation of the object.

In an example embodiment, the neural network based model may be trained based on at least one of the first original document, the training dataset, the augmented dataset and the annotated dataset. The neural network based model may be a model pertaining to the feature "You Only Look Once" (YOLO) that may enable to detect object in a single pass. In an example embodiment, the neural network based model may be a convolutional neural network (CNN) based model. In an example embodiment, the neural network based model may be an object detection model, such as, for example, Faster region based CNN (R-CNN), single shot detector (SSD), RetinaNet or other such techniques. The trained model may detect the objects in a document accurately and in real-time. The trained model may also be able to detect objects in a test document irrespective the position of the object on the document. For example, the object such as signature may be present on any portion of the test document and may not be limited to fields/sections such as "Sign here", which may be undetectable by conventional techniques/models. This may be mainly because the model may not be trained to locate the signatures in places other than pre-defined positions. However, using the trained model that is trained using the unique training datasets generated by the system of the present disclosure, objects present in other than pre-defined positions in the test document can also be effectively detected. The training datasets (and corresponding augmented and annotated datasets) may be exponentially generated by applying various data augmentation techniques. For example, the training datasets (or augmented datasets) may be obtained by rotation or flipping, noise processing (or addition), placement of objects (signatures) over existing text and by combination/blending of the objects with multiple documents. This leads to generated of a diverse training datasets (or augmented datasets) for effective training of the neural network based model.

The trained model may be tested prior to deploying for object detection in test documents. For example, the performance of the trained model may be validated by assessing a set of inferences obtained by the automated detection of the object in a validation dataset. The validation dataset may be a set of documents that may be used to evaluating performance of the trained model prior to the deployment of the model. In an example embodiment, if performance of the trained model may exceed a pre-defined threshold value, the trained model may be deployed for the automated detection of the object in the test document. In an alternate example embodiment, if the performance of the trained model may fail to exceed the pre-defined threshold value, the trained model may be re-trained by utilizing another training dataset. The performance may be assessed with respect to measurement of one or more parameters. For example, the parameter may include at least one of accuracy, error estimation, precision, number of attempts performed to detect the object in the validated dataset and time taken to detect the object in the validated dataset. In an example embodiment, the parameter may pertain to metrics such as, for example, mean Average Precision (mAP) and mean Average Recall (mAR), both of which may be required for estimating the model performance. Various other parameters may be included to test the performance of the trained model.

Referring back to FIG. 2, and in an example embodiment, the object detector 110 may utilize the trained model to perform the automated detection of the object in a test document. The test document may pertain to at least one of structured document and unstructured document. In an example embodiment, prior to the automated detection, the test document may be subjected to at least one of pre-processing and segmentation. The pre-processing and/or segmentation may pertain to at least one of a noise removal, background editing, reduction of blurring effect, rotation of the test document, brightness adjustment, contrast adjustment and other functions that may be essential for improving the accuracy of object detection. In an alternate embodiment, the pre-processing and/or segmentation may be optional. a performance of the trained model is validated by assessing a set of inferences obtained by the automated detection of the object in a validation dataset.

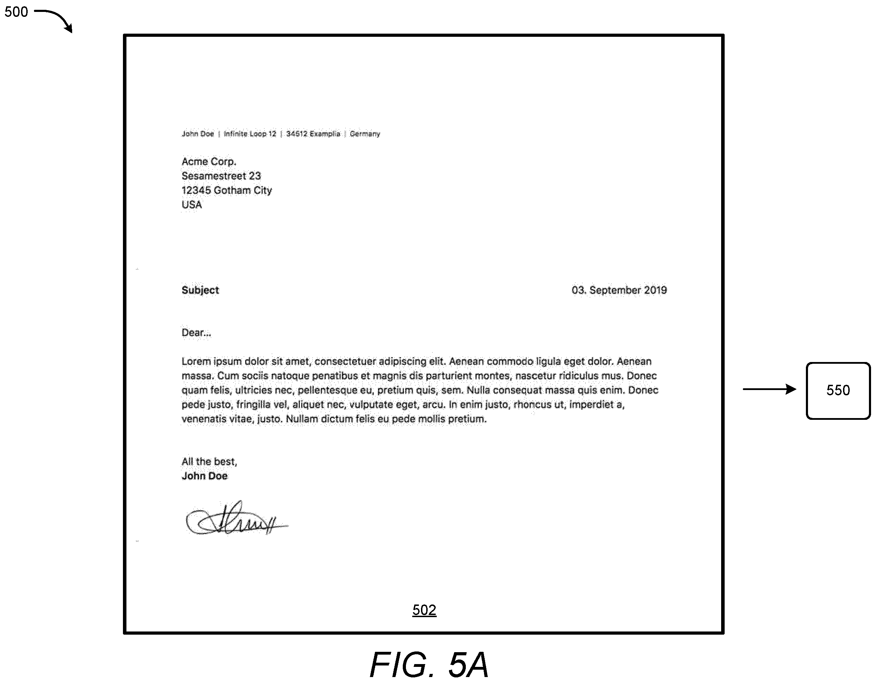

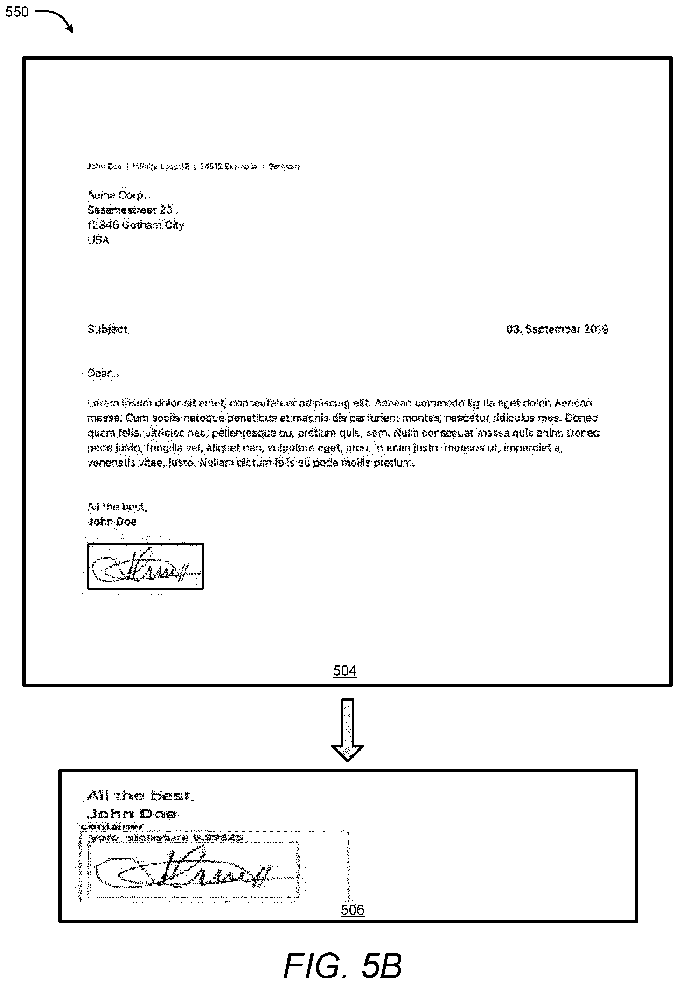

FIGs. 5A-5B illustrate an exemplary representation for automated detection of an object in a test document, according to an example embodiment of the present disclosure. In an example embodiment, and as illustrated in FIG. 5A, the system (object detector 110 of FIG. 1) may receive a test document 502 in which an object (such as a signature) may be required to be detected. In this example, the test document 502 is a scanned document (for example a human resources (HR) form) that contains a signature. As shown in FIG.5B (550), the object detector efficiently performs the object detection on the test document 502 (of FIG. 5A) to locate the object (as shown in rectangular box in 504 in FIG. 5B). In an example embodiment, upon detection of the object in the test document, the object detector 110 may also provide co-ordinates of the detected object with respect to the test document. For example, the object detector 110 may detect co-ordinates such as, for example, X and Y coordinates, width, and height of the signature. In an alternate embodiment, the co-ordinates of detected object may also be used for annotating the test documents, which may be useful for later training of the neural network based model. As shown in FIG. 5B, the signature may be detected and highlighted, for example, in a rectangular bounding box having a colored or black boundary. In an example embodiment, the highlighted portion may appear as shown in 506, wherein the system may also display a value that represents confidence level pertaining to the type of object as detected by the model/corresponding algorithm. For example, in the detected signature as shown in 506, the confidence level of the object being a signature seems to be around 85%.

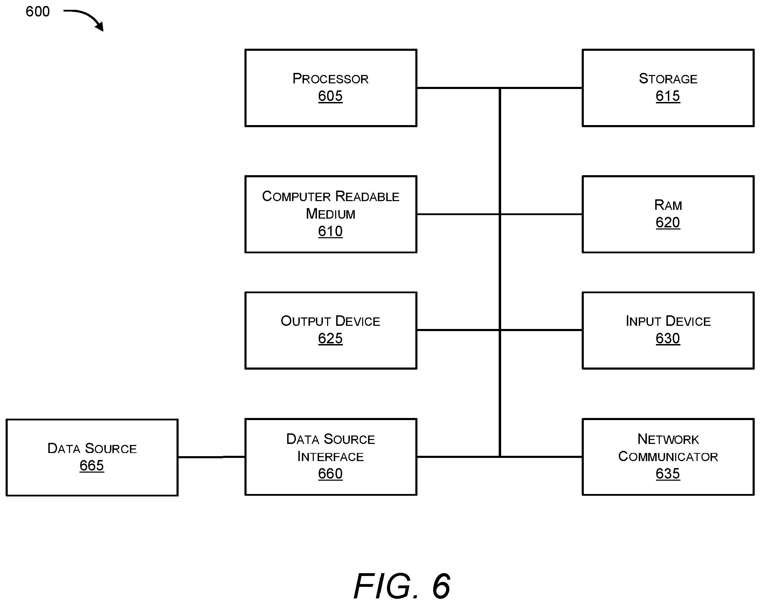

FIG. 6 illustrates a hardware platform (600) for implementation of the disclosed system, according to an example embodiment of the present disclosure. For the sake of brevity, construction and operational features of the system 100 which are explained in detail above are not explained in detail herein. Particularly, computing machines such as but not limited to internal/external server clusters, quantum computers, desktops, laptops, smartphones, tablets, and wearables which may be used to execute the system 100 or may include the structure of the hardware platform 600. As illustrated, the hardware platform 600 may include additional components not shown, and that some of the components described may be removed and/or modified. For example, a computer system with multiple GPUs may be located on external-cloud platforms including Amazon Web Services, or internal corporate cloud computing clusters, or organizational computing resources, etc.

The hardware platform 600 may be a computer system such as the system 100 that may be used with the embodiments described herein. The computer system may represent a computational platform that includes components that may be in a server or another computer system. The computer system may execute, by the processor 605 (e.g., a single or multiple processors) or other hardware processing circuit, the methods, functions, and other processes described herein. These methods, functions, and other processes may be embodied as machine-readable instructions stored on a computer-readable medium, which may be non-transitory, such as hardware storage devices (e.g., RAM (random access memory), ROM (read-only memory), EPROM (erasable, programmable ROM), EEPROM (electrically erasable, programmable ROM), hard drives, and flash memory). The computer system may include the processor 605 that executes software instructions or code stored on a non-transitory computer-readable storage medium 610 to perform methods of the present disclosure. The software code includes, for example, instructions to generate the training datasets and the augmented datasets. In an example, the dataset generator 104, the data augmentation engine 106 may be software codes or components performing these steps.

The instructions on the computer-readable storage medium 610 are read and stored the instructions in storage 615 or in random access memory (RAM). The storage 615 may provide a space for keeping static data where at least some instructions could be stored for later execution. The stored instructions may be further compiled to generate other representations of the instructions and dynamically stored in the RAM such as RAM 620. The processor 605 may read instructions from the RAM 620 and perform actions as instructed.

The computer system may further include the output device 625 to provide at least some of the results of the execution as output including, but not limited to, visual information to users, such as external agents. The output device 625 may include a display on computing devices and virtual reality glasses. For example, the display may be a mobile phone screen or a laptop screen. GUIs and/or text may be presented as an output on the display screen. The computer system may further include an input device 630 to provide a user or another device with mechanisms for entering data and/or otherwise interact with the computer system. The input device 630 may include, for example, a keyboard, a keypad, a mouse, or a touchscreen. Each of these output devices 625 and input device 630 may be joined by one or more additional peripherals. For example, the output device 625 may be used to display the training datasets and/or output of the object detection by the system 100.

A network communicator 635 may be provided to connect the computer system to a network and in turn to other devices connected to the network including other clients, servers, data stores, and interfaces, for instance. A network communicator 635 may include, for example, a network adapter such as a LAN adapter or a wireless adapter. The computer system may include a data sources interface 640 to access the data source 645. The data source 645 may be an information resource. As an example, a database of exceptions and rules may be provided as the data source 645. Moreover, knowledge repositories and curated data may be other examples of the data source 645.

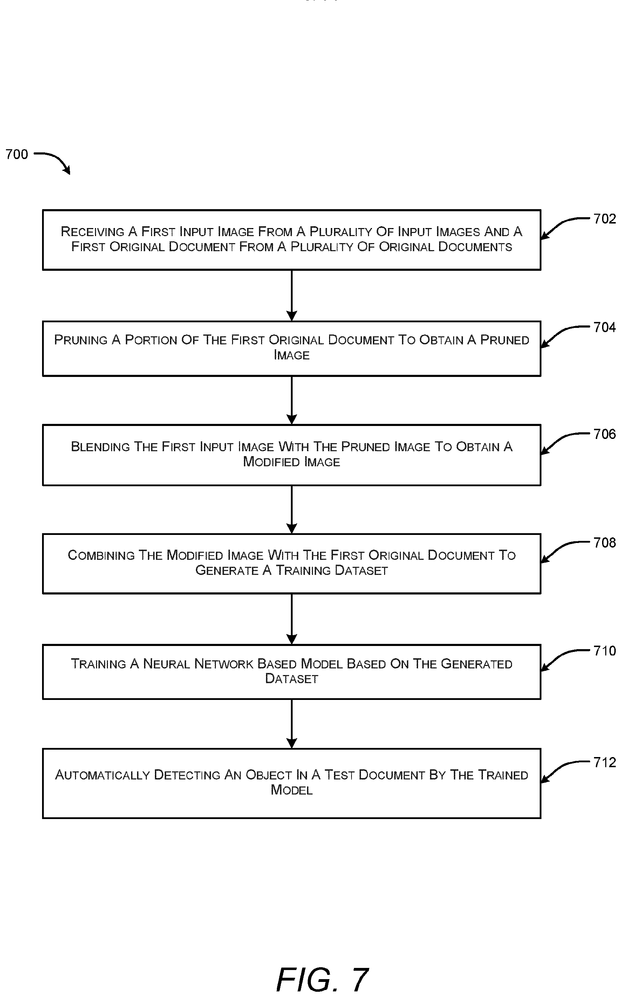

FIG. 7 illustrates a flow diagram 700 for facilitating an automated detection of an object in a test document, according to an example embodiment of the present disclosure. At 702, the method includes a step of obtaining a first input image from a plurality of input images and a first original document from the plurality of original documents. The first input image may bear a first pre-defined representation of the object. The plurality of input images and the plurality of original documents may be stored as digitized input datasets in a data lake. Each input image may include a pre-defined representation of the object. At 704, the method includes a step of pruning a portion of the first original document to obtain a pruned image. At 706, the method includes a step of blending the first input image with the pruned image to obtain a modified image. The blending may be performed using a blending technique. The modified image may include the pruned image bearing the first pre-defined representation. At 708, the method includes a step of combining, by the processor, the modified image with the first original document to generate a training dataset. At 710, the method includes a step of training a neural network based model with the training dataset to obtain a trained model. At 712, the method includes a step of detecting automatically the object in the test document by utilizing the trained model.

In an example embodiment, prior to detecting the object in the test document, the method may include a step of facilitating the test document to at least one of pre-processing and segmentation. In an example embodiment, the method may include a step of augmenting the generated training dataset to obtain an augmented dataset. The step of augmenting may include processing the training dataset. The processing may include at least one of noise removal, background editing, reduction of blurring effect, object cropping, object flipping, object rotation, object scaling, brightness adjustment, contrast adjustment and duplication of the first pre-defined representation of the object.

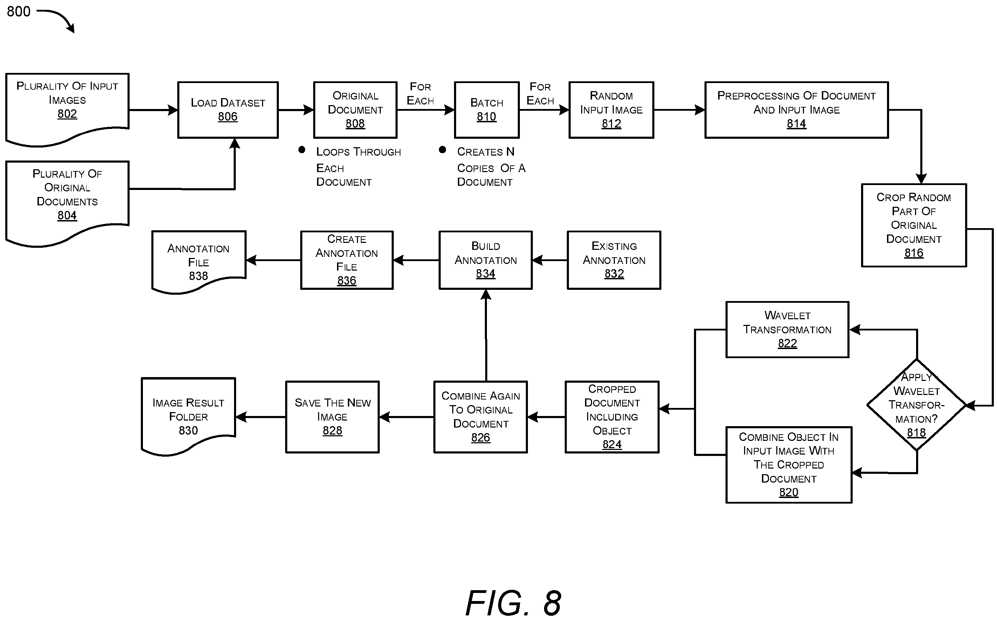

FIG. 8 illustrates an exemplary flow diagram for depicting steps involved in generation of training dataset and annotated dataset, according to an example embodiment of the present disclosure. At 806, a plurality of input images 802 and a plurality of original documents 804 may be loaded. At 808, the method may include may looping through the plurality of original documents 804 to select the first original document. At 810, the first original document may be processed to create a batch including multiple copies of the first original document. At 812, for each copy of the first original document, a first input image may be randomly selected from the plurality of images 802. Further, at 814, the first input image and/or the first original document may be pre-processed as per standard requirements. For example, prior to processing, one standard requirement may be to arrange the first original document as per an expected layout/orientation, such as, for example, in portrait or landscape. At 816, a portion of the first original document may be pruned (or cropped) to obtain a pruned image. The portion that is pruned or cropped may correspond to a position where the first input image may be required to be inserted in the first original document. The first input image may be blended with the pruned image to obtain a modified image. The blending is performed by using a blending technique which comprises a wavelet transformation technique. The blending may reduce sharp transitions to enable to generate effective training dataset. At 818, the method may assess a need for applying a specific blending technique, for example, wavelet transformation. If necessary for the specific case, the method may apply the wavelet transformation at 822. In an example embodiment, decision to perform or to not perform the wavelet transformation may be based on global parameters that control the blending. If not necessary then the method may perform blending using other known techniques. At 826, the outcome or the modified image from any of the steps 822 or 820 may be combined with the first original document to generate a training dataset. The modified image and/or the training dataset may be labelled to indicate a position of the blended object in the training dataset. In another example, the system may save the modified image and/or the training dataset in a specific local storage or folder 830. At 834, the method may include a step of building an annotation for the training datasets. For example, at least one of the modified documents, the training dataset and the augmented dataset may be annotated to obtain an annotated dataset (838). The annotated dataset may be obtained (step 836) by creating an annotation file that may pertain to at least one of co-ordinates of the object on the annotated dataset and a local storage path of the modified image. Upon generation of the training dataset, the data augmentation engine 106 may augment the generated training dataset to obtain an augmented dataset. In an example embodiment, the augmented dataset may be obtained by processing the training dataset. The augmented dataset may be an enhanced or corrected version of the training dataset that may lead to improvement in one or more features of the training dataset for effective training. For example, the augmented dataset may be obtained by processing the training dataset through at least one of noise removal, background editing, reduction of blurring effect, object cropping, object flipping, object rotation, object scaling, brightness adjustment, contrast adjustment and duplication of the first pre-defined representation of the object.

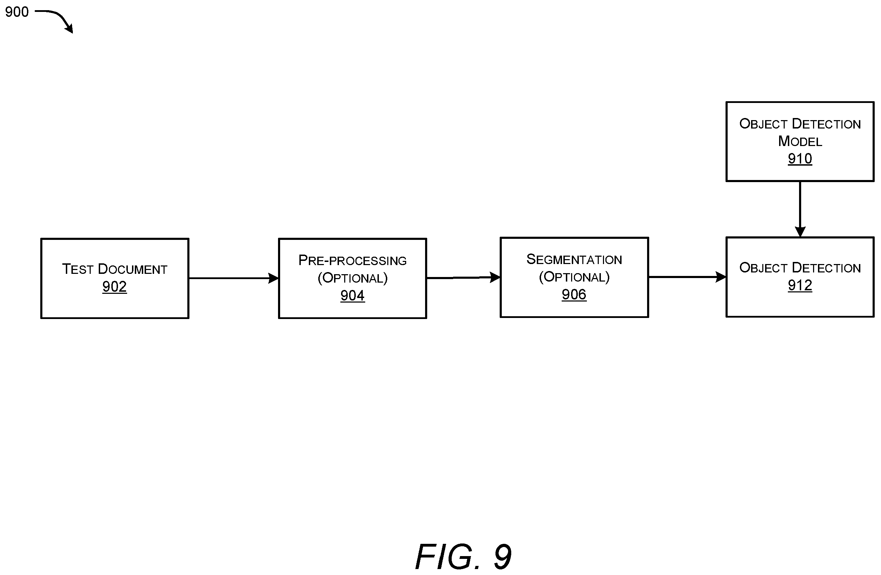

FIG. 9 illustrates an exemplary flow diagram depicting steps involved in automated detection of an object in a test document, according to an example embodiment of the present disclosure. As illustrated in FIG. 9, a test document 902 may be received in which an object (such as a signature) may be required to be detected. The test document may pertain to at least one of structured document and unstructured document. At 904, the test document may be subjected to pre-processing and at 906, test document may be subjected to segmentation. The pre-processing and/or segmentation may pertain to at least one of a noise removal, background editing, reduction of blurring effect, rotation of the test document, brightness adjustment, contrast adjustment and other functions that may be essential for improving the accuracy of object detection. In an alternate embodiment, the pre-processing and/or segmentation may be optional. At 912, the method may include the detection of the object on the test document to locate the object, by using the trained model.

One of ordinary skill in the art will appreciate that techniques consistent with the present disclosure are applicable in other contexts as well without departing from the scope of the disclosure.

What has been described and illustrated herein are examples of the present disclosure. The terms, descriptions, and figures used herein are set forth by way of illustration only and are not meant as limitations.

## Claims

1. A system (100) for facilitating an automated detection of an object in a test document (502, 902), wherein the test document is a scanned document, the system comprising:
a processor (102, 605) coupled to a data lake (108), wherein the data lake is configured to:
store digitized input datasets comprising a plurality of input images (202, 802) and a plurality of original documents (204, 804), wherein each input image includes a pre-defined representation of the object; and
the processor comprising a dataset generator (104) to:
obtain (702), from the data lake, a first input image (304, 404) from the plurality of input images and a first original document (302) from the plurality of original documents, the first input image bearing a first pre-defined representation of the object;
prune (704, 816) a portion of the first original document to obtain a pruned image (402); and
blend (706), using a blending technique, the first input image with the pruned image to obtain a modified image (406), wherein the blending technique comprises a wavelet transformation technique and the modified image includes the pruned image bearing the first pre-defined representation;
wherein the modified image is combined (708, 826) with the first original document to generate a training dataset (350), the training dataset being utilized to train (710) a neural network based model to obtain a trained model, and
wherein the trained model is used (712) for the automated detection (912) of the object in the test document.

2. The system as claimed in claim 1, wherein the object includes at least one of a signature, a digital signature, a checkbox section, an image, a handwritten text and a drawing.

3. The system as claimed in claim 1 or 2, wherein the plurality of input images pertains to a set of diverse image samples bearing the object, the pre-defined representation pertaining to a variation in the form of the object.

4. The system as claimed in claim 1, 2 or 3, wherein the data generator loops (808) through the plurality of original documents and selects the first original document, the first original document being processed (810) to create multiple copies, and wherein, for each copy of the first original document, the data generator randomly selects (812) the first input image.

5. The system as claimed in any of the preceding claims, wherein the processor comprises:
a data augmentation engine (106) to:
augment the generated training dataset to obtain an augmented dataset, wherein the augmented dataset is obtained by processing the training dataset to perform at least one of noise removal, background editing, reduction of blurring effect, object cropping, object flipping, object rotation, object scaling, brightness adjustment, contrast adjustment and duplication of the first pre-defined representation of the object.

6. The system as claimed in claim 5, wherein at least one of the modified document, the training dataset and the augmented dataset is annotated (834) to obtain an annotated dataset (838), and the annotated dataset being indicative of an information pertaining to the at least one of co-ordinates of the object on the annotated document and a local storage path of modified image, wherein, optionally, the neural network based model is trained using at least one of the first original document, the training dataset, the augmented dataset and the annotated dataset.

7. The system as claimed in any of the preceding claims, wherein a performance of the trained model is validated by assessing a set of inferences obtained by the automated detection of the object in a validation dataset,
wherein, optionally, if the performance of the trained model exceeds a pre-defined threshold value, the trained model is deployed for the automated detection of the object in the test document.

8. The system as claimed in claim 7, wherein if the performance of the trained model fails to exceed the pre-defined threshold value, the trained model is re-trained by utilizing another training dataset, and/or
wherein, optionally, the performance is assessed with respect to measurement of a parameter including at least one of: accuracy, error estimation, precision, and/or number of attempts performed to detect the object in the validated dataset and time taken to detect the object in the validated dataset.

9. The system as claimed in any of the preceding claims, wherein the training dataset, the augmented dataset and the annotated dataset are digitized documents that are stored in the data lake, and wherein the test document and the first original document pertain to at least one of structured document and unstructured document.

10. The system as claimed in any of the preceding claims, wherein prior to the automated detection, the test document is subjected to at least one of pre-processing (904) and segmentation (906).

11. A method for facilitating an automated detection of an object in a test document, wherein the test document is a scanned document, the method comprising:
obtaining, by a processor, a first input image from a plurality of input images and a first original document from the plurality of original documents, the first input image bearing a first pre-defined representation of the object, wherein the plurality of input images and the plurality of original documents are stored as digitized input datasets in a data lake, wherein each input image includes a pre-defined representation of the object;
pruning, by the processor, a portion of the first original document to obtain a pruned image;
blending, by the processor, using a blending technique, the first input image with the pruned image to obtain a modified image, wherein the blending technique comprises a wavelet transformation technique and the modified image includes the pruned image bearing the first pre-defined representation; and
combining, by the processor, the modified image with the first original document to generate a training dataset.

12. The method as claimed in claim 11, the method comprising:
training, by the processor, a neural network based model with the training dataset to obtain a trained model, and
detecting automatically, by the processor, the object in the test document by utilizing the trained model.

13. The method as claimed in claim 11 or 12, wherein prior to detecting the object in the test document, the method comprising:
facilitating, by the processor, the test document to at least one of pre-processing and segmentation.

14. The method as claimed in claim 11, 12 or 13, the method comprising:
augmenting, by the processor, the generated training dataset to obtain an augmented dataset,
wherein the augmenting includes processing the training dataset to perform at least one of noise removal, background editing, reduction of blurring effect, object cropping, object flipping, object rotation, object scaling, brightness adjustment, contrast adjustment and duplication of the first pre-defined representation of the object.

15. At least one non-transitory computer readable medium (610) storing computer executable instructions that, when executed by at least one processor (605), cause the processor to perform the method of any of claims 11 to 14.

## Patentansprüche

1. System (100) zum Erleichtern einer automatisierten Erkennung eines Objekts in einem Testdokument (502, 902), wobei das Testdokument ein gescanntes Dokument ist, wobei das System umfasst:
einen Prozessor (102, 605), der an einen Data Lake (108) gekoppelt ist, wobei der Data Lake ausgestaltet ist zum:
Speichern digitalisierter Eingangsdatensätze, die eine Vielzahl von Eingangsbildern (202, 802) und eine Vielzahl von Originaldokumenten (204, 804) umfassen, wobei jedes Eingangsbild eine vordefinierte Darstellung des Objekts umfasst; und
der Prozessor einen Datensatzgenerator (104) umfasst zum:
Erhalten (702), von dem Data Lake, eines ersten Eingangsbildes (304, 404) von der Vielzahl von Eingangsbildern und eines ersten Originaldokuments (302) von der Vielzahl von Originaldokumenten, wobei das erste Eingangsbild eine erste vordefinierte Darstellung des Objekts trägt;
Beschneiden (704, 816) eines Abschnitts des ersten Originaldokuments, sodass ein beschnittenes Bild (402) erhalten wird; und
Mischen (706), unter Verwendung einer Mischtechnik, des ersten Eingangsbildes mit dem beschnittenen Bild, sodass ein geändertes Bild (406) erhalten wird, wobei die Mischtechnik eine Wavelet-Transformationstechnik umfasst und das geänderte Bild das beschnittene Bild umfasst, das die erste vordefinierte Darstellung trägt;
wobei das geänderte Bild so mit dem ersten Originaldokument kombiniert (708, 826) wird, dass ein Trainingsdatensatz (350) erzeugt wird, wobei der Trainingsdatensatz zum Trainieren (710) eines neuronalen-Netzwerk-basierten Modells genutzt wird, sodass ein trainiertes Modell erhalten wird, und
wobei das trainierte Modell für die automatisierte Erkennung (912) des Objekts in dem Testdokument verwendet (712) wird.

2. System nach Anspruch 1, wobei das Objekt mindestens eines von einer Signatur, einer digitalen Signatur, einem Kontrollkästchenabschnitt, einem Bild, einem handgeschriebenen Text und/oder einer Zeichnung umfasst.

3. System nach Anspruch 1 oder 2, wobei die Vielzahl von Eingangsbildern zu einer Menge verschiedener Bildproben gehören, die das Objekt tragen, wobei die vordefinierte Darstellung zu einer Veränderung in der Form des Objekts gehört.

4. System nach Anspruch 1, 2 oder 3, wobei der Datengenerator (808) die Vielzahl von Originaldokumenten in einer Schleife durchläuft und das erste Originaldokument auswählt, wobei das erste Originaldokument so verarbeitet (810) wird, dass mehrere Kopien erzeugt werden, und wobei, für jede Kopie des ersten Originaldokuments, der Datengenerator zufällig das erste Eingangsbild auswählt (812).

5. System nach einem der vorhergehenden Ansprüche, wobei der Prozessor umfasst:
ein Datenaugmentierungsmodul (106) zum:
Augmentieren des erzeugten Trainingsdatensatzes, sodass ein augmentierter Datensatz erhalten wird, wobei der augmentierte Datensatz mittels Verarbeitens des Trainingsdatensatzes erhalten wird, sodass mindestens eines von Rauschentfernung, Hintergrundbearbeitung, Verminderung von Unschärfeeffekt, Objektzuschneiden, Objektkippen, Objektdrehung, Objektskalieren, Helligkeitsanpassung, Kontrastanpassung und/oder Duplizierung der ersten vordefinierten Darstellung des Objekts durchgeführt wird bzw. werden.

6. System nach Anspruch 5, wobei mindestens eines von dem geänderten Dokument, dem Trainingsdatensatz und/oder dem augmentierten Datensatz so annotiert (834) wird bzw. werden, dass ein annotierter Datensatz (838) erhalten wird, und der annotierte Datensatz Informationen angibt, die zu mindestens einer von Koordinaten des Objekts auf dem annotierten Dokument und einem lokalen Speicherpfad des geänderten Bildes gehören, wobei das neuronale-Netzwerkbasierte Modell wahlweise unter Verwendung mindestens eines von dem ersten Originaldokument, dem Trainingsdatensatz, dem augmentierten Datensatz und/oder dem annotierten Datensatz trainiert wird.

7. System nach einem der vorhergehenden Ansprüche, wobei eine Leistung des trainierten Modells durch Bewerten einer Menge von Interferenzen validiert wird, die mittels der automatisierten Erkennung des Objekts in einem Validierungsdatensatz erhalten werden,
wobei wahlweise, wenn die Leistung des trainierten Modells einen vordefinierten Schwellenwert überschreitet, das trainierte Modell für die automatisierte Erkennung des Objekts in dem Testdokument eingesetzt wird.

8. System nach Anspruch 7, wobei, wenn die Leistung des trainierten Modells am Überschreiten des vordefinierten Schwellenwerts scheitert, das trainierte Modell erneut unter Nutzung eines anderen Trainingsdatensatzes trainiert wird, und/oder
wobei wahlweise die Leistung in Bezug auf Messung eines Parameters bewertet wird, der mindestens eines umfasst von: Genauigkeit, Fehlerschätzung, Präzision und/oder Anzahl von durchgeführten Versuchen zum Erkennen des Objekts im validierten Datensatz und Zeit, die zum Erkennen des Objekts in dem validierten Datensatz erforderlich war.

9. System nach einem der vorhergehenden Ansprüche, wobei der Trainingsdatensatz, der augmentierte Datensatz und der annotierte Datensatz digitalisierte Dokumente sind, die in dem Data Lake gespeichert sind, und wobei das Testdokument und das erste Originaldokument zu mindestens einem von einem strukturierten Dokument und/oder einem unstrukturierten Dokument gehören.

10. System nach einem der vorhergehenden Ansprüche, wobei vor der automatisierten Erkennung das Testdokument mindestens einem von Vorverarbeitung (904) und/oder Segmentierung (906) unterzogen wird.

11. Verfahren zum Erleichtern einer automatisierten Erkennung eines Objekts in einem Testdokument, wobei das Testdokument ein gescanntes Dokument ist, wobei das Verfahren umfasst:
Erhalten, durch einen Prozessor, eines ersten Eingangsbildes von einer Vielzahl von Eingangsbildern und eines ersten Originaldokuments von der Vielzahl von Originaldokumenten, wobei das erste Eingangsbild eine erste vordefinierte Darstellung des Objekts trägt, wobei die Vielzahl von Eingangsbildern und die Vielzahl von Originaldokumenten als digitalisierte Eingangsdatensätze in einem Data Lake gespeichert werden, wobei jedes Eingangsbild eine vordefinierte Darstellung des Objekts umfasst;
Beschneiden, mittels des Prozessors, eines Abschnitts des ersten Originaldokuments, sodass ein beschnittenes Bild erhalten wird;
Mischen, mittels des Prozessors, unter Verwendung einer Mischtechnik, des ersten Eingangsbildes mit dem beschnittenen Bild, sodass ein geändertes Bild erhalten wird, wobei die Mischtechnik eine Wavelet-Transformationstechnik umfasst und das geänderte Bild das beschnittene Bild umfasst, das die erste vordefinierte Darstellung trägt; und
Kombinieren, mittels des Prozessors, des geänderten Bildes mit dem ersten Originaldokument, sodass ein Trainingsdatensatz erzeugt wird.

12. Verfahren nach Anspruch 11, wobei das Verfahren umfasst:
Trainieren, mittels des Prozessors, eines neuronalen-Netzwerk-basierten Modells mit dem Trainingsdatensatz, sodass ein trainiertes Modell erhalten wird, und
automatisches Erkennen, mittels des Prozessors, des Objekts in dem Testdokument unter Nutzung des trainierten Modells.

13. Verfahren nach Anspruch 11 oder 12, wobei vor dem Erkennen des Objekts in dem Testdokument das Verfahren umfasst:
Erleichtern, mittels des Prozessors, mindestens eines von Vorverarbeitung und/oder Segmentierung des Testdokuments.

14. Verfahren nach Anspruch 11, 12 oder 13, wobei das Verfahren umfasst:
Augmentieren, mittels des Prozessors, des erzeugten Trainingsdatensatzes, sodass ein augmentierter Datensatz erhalten wird,
wobei das Augmentieren das Verarbeiten des Trainingsdatensatzes umfasst, sodass mindestens eines von Rauschentfernung, Hintergrundbearbeitung, Verminderung von Unschärfeeffekt, Objektzuschneiden, Objektkippen, Objektdrehung, Objektskalieren, Helligkeitsanpassung, Kontrastanpassung und/oder Duplizierung der ersten vordefinierten Darstellung des Objekts durchgeführt wird bzw. werden.

15. Mindestens ein nichtflüchtiger maschinenlesbarer Datenträger (610), der maschinenausführbare Anweisungen speichert, die, wenn sie von mindestens einem Prozessor (605) ausgeführt werden, den Prozessor veranlassen, das Verfahren nach einem der Ansprüche 11 bis 14 durchzuführen.

## Revendications

1. Système (100) destiné à faciliter une détection automatisée d'un objet dans un document d'essai (502, 902), dans lequel le document d'essai est un document scanné, le système comprenant :
un processeur (102, 605) accouplé à un lac de données (108), dans lequel le lac de données est configuré pour :
stocker des ensembles de données d'entrée numérisés comprenant une pluralité d'images d'entrée (202, 802) et une pluralité de documents originaux (204, 804), dans lequel chaque image d'entrée inclut une représentation prédéfinie de l'objet ; et
le processeur comprenant un générateur d'ensemble de données (104) pour :
obtenir (702), à partir du lac de données, une première image d'entrée (304, 404) à partir de la pluralité d'images d'entrée et un premier document original (302) à partir de la pluralité de documents originaux, la première image d'entrée portant une première représentation prédéfinie de l'objet ;
réduire (704, 816) une partie du premier document original pour obtenir une image réduite (402) ; et
fusionner (706), à l'aide d'une technique de fusion, la première image d'entrée avec l'image réduite pour obtenir une image modifiée (406), dans lequel la technique de fusion comprend une technique de transformation par ondelettes et l'image modifiée inclut l'image réduite portant la première représentation prédéfinie ;
dans lequel l'image modifiée est combinée (708, 826) avec le premier document original pour générer un ensemble de données d'entraînement (350), l'ensemble de données d'entraînement étant utilisé pour entraîner (710) un modèle basé sur un réseau neuronal afin d'obtenir un modèle entraîné, et
dans lequel le modèle entraîné est utilisé (712) pour la détection automatisée (912) de l'objet dans le document d'essai.

2. Système selon la revendication 1, dans lequel l'objet inclut l'un au moins parmi une signature, une signature numérique, une section de case à cocher, une image, un texte manuscrit et un dessin.

3. Système selon la revendication 1 ou 2, dans lequel la pluralité d'images d'entrée se rapportent à un ensemble de différents échantillons d'image portant l'objet, la représentation prédéfinie se rapportant à une variation dans la forme de l'objet.

4. Système selon la revendication 1, 2 ou 3, dans lequel le générateur de données fait une boucle (808) à travers la pluralité de documents originaux et sélectionne le premier document original, le premier document original étant traité (810) pour créer une multitude de copies, et dans lequel, pour chaque copie du premier document original, le générateur de données sélectionne de manière aléatoire (812) la première image d'entrée.

5. Système selon l'une quelconque des revendications précédentes, dans lequel le processeur comprend :
un moteur d'augmentation de données (106) pour :
augmenter l'ensemble de données d'entraînement généré pour obtenir un ensemble de données augmenté, dans lequel l'ensemble de données augmenté est obtenu par un traitement de l'ensemble de données d'entraînement pour effectuer l'un au moins parmi l'élimination du bruit, l'édition d'un arrière-plan, la réduction de l'effet de flou, le rognage de l'objet, le pivotement de l'objet, la rotation de l'objet, la mise à l'échelle de l'objet, le réglage de la luminosité, le réglage du contraste et la duplication de la première représentation prédéfinie de l'objet.

6. Système selon la revendication 5, dans lequel l'un au moins parmi le document modifié, l'ensemble de données d'entraînement et l'ensemble de données augmenté est annoté (834) pour obtenir un ensemble de données annoté (838), et l'ensemble de données annoté indiquant une information relative à l'un au moins parmi des coordonnées de l'objet sur le document annoté et un chemin de stockage local de l'image modifiée, dans lequel, optionnellement, le modèle basé sur un réseau neuronal est entraîné à l'aide de l'un au moins parmi le premier document original, l'ensemble de données d'entraînement, l'ensemble de données augmenté et l'ensemble de données annoté.

7. Système selon l'une quelconque des revendications précédentes, dans lequel une performance du modèle entraîné est validée par l'évaluation d'un ensemble d'interférences obtenue par la détection automatisée de l'objet dans un ensemble de données de validation,
dans lequel, optionnellement, si la performance du modèle entraîné dépasse une valeur seuil prédéfinie, le modèle entraîné est déployé pour la détection automatisée de l'objet dans le document d'essai.

8. Système selon la revendication 7, dans lequel, si la performance du modèle entraîné ne parvient pas à dépasser la valeur seuil prédéfinie, le modèle entraîné est réentraîné à l'aide d'un autre ensemble de données d'entraînement, et/ou
dans lequel, optionnellement, la performance est évaluée par rapport à la mesure d'un paramètre incluant l'un au moins parmi : l'exactitude, l'estimation d'erreur, la précision, et/ou un nombre de tentatives de détection de l'objet dans l'ensemble de données validé et le temps nécessaire à la détection de l'objet dans l'ensemble de données validé.

9. Système selon l'une quelconque des revendications précédentes, dans lequel l'ensemble de données d'entraînement, l'ensemble de données augmenté et l'ensemble de données annoté sont des documents numérisés, lesquels sont stockés dans le lac de données, et dans lequel le document d'essai et le premier document original se rapportent à l'un au moins parmi un document structuré et un document non structuré.

10. Système selon l'une quelconque des revendications précédentes, dans lequel, avant la détection automatisée, le document d'essai est soumis à l'un au moins parmi un prétraitement (904) et une segmentation (906).

11. Procédé de facilitation d'une détection automatisée d'un objet dans un document d'essai, dans lequel le document d'essai est un document scanné, le procédé comprenant :
l'obtention, par un processeur, d'une première image d'entrée à partir d'une pluralité d'images d'entrée et d'un premier document original à partir d'une pluralité de documents originaux, la première image d'entrée portant une première représentation prédéfinie de l'objet, dans lequel la pluralité d'images d'entrée et la pluralité de documents originaux sont stockés en tant qu'ensembles de données d'entrée numérisés dans un lac de données, dans lequel chaque image d'entrée inclut une représentation prédéfinie de l'objet ;
la réduction, par le processeur, d'une partie du premier document original pour obtenir une image réduite ;
la fusion, par le processeur, à l'aide d'une technique de fusion, de la première image d'entrée avec l'image réduite pour obtenir une image modifiée, dans lequel la technique de fusion comprend une technique de transformation par ondelettes et l'image modifiée inclut l'image réduite portant la première représentation prédéfinie ; et
la combinaison, par le processeur, de l'image modifiée avec le premier document original pour générer un ensemble de données d'entraînement.

12. Procédé selon la revendication 11, le procédé comprenant :
l'entraînement, par le processeur, d'un modèle basé sur un réseau neuronal avec l'ensemble de données d'entraînement pour obtenir un modèle entraîné, et
la détection automatisée, par le processeur, de l'objet dans le document d'essai à l'aide du modèle entraîné.

13. Procédé selon la revendication 11 ou 12, dans lequel, avant la détection de l'objet dans le document d'essai, le procédé comprend :
la facilitation, par le processeur, du document d'essai pour l'un au moins parmi un prétraitement et une segmentation.

14. Procédé selon la revendication 11, 12 ou 13, le procédé comprenant :
l'augmentation, par le processeur, de l'ensemble de données d'entraînement généré afin d'obtenir un ensemble de données augmenté,
dans lequel l'augmentation inclut le traitement de l'ensemble de données d'entraînement pour effectuer l'un au moins parmi l'élimination du bruit, l'édition d'un arrière-plan, la réduction de l'effet de flou, le rognage de l'objet, le pivotement de l'objet, la rotation de l'objet, la mise à l'échelle de l'objet, le réglage de la luminosité, le réglage du contraste et la duplication de la première représentation prédéfinie de l'objet.

15. Au moins un support non transitoire lisible par ordinateur (610) stockant des instructions exécutables par ordinateur, lesquelles, lorsqu'elles sont exécutées par au moins un processeur (605), amènent le processeur à mettre en œuvre le procédé selon l'une quelconque des revendications 11 à 14.
